# EUROPEAN PATENT SPECIFICATION

(11) **EP 3 272 213 B1**
(45) Date of publication and mention of the grant of the patent: **14.10.2020**
(21) Application number: 16180350.7
(22) Date of filing: 20.07.2016
(51) Int. Cl.: A01K 27/00

(54) **PET LEASH**
TIERLEINE
LAISSE POUR ANIMAL DE COMPAGNIE

(43) Date of publication of application: 24.01.2018
(73) Proprietor: Fang, Daniel John, Fo Tan, New Territories (HK)
(72) Inventor: Fang, Daniel John, Fo Tan, New Territories (HK)
(74) Representative: Chas. Hude A/S

(56) References cited:
- US-A- 4 879 972
- US-B1- 6 662 753

## Description

### BACKGROUND OF THE INVENTION

### 1. Field of the Invention

The present invention relates to a pet leash; more particularly, the present invention relates to a pet leash which is easy to fasten to an external object.

### 2. Description of the Related Art

In modern society, many people own pets, and the dog is one kind of popular pet. Because a dog needs to go outside for exercise to ensure its health, a dog owner must often walk a dog. To prevent the dog from becoming lost or causing any danger (such as running into a road and causing a car accident), the owner usually uses a pet leash to control the dog, wherein one end of the pet leash is fastened to a collar around the neck or a harness on the back of the dog, and another end is held by the owner. This arrangement keeps the dog in close proximity to the owner and prevents the dog from escaping the control of the owner or becoming lost.

However, when walking a dog, sometimes the owner needs to have his hands free (such as tying a shoelace, opening an umbrella etc) or if the owner wants to enter a place where pets are not allowed (such as a restaurant, a library, or a department store), the owner must temporarily fasten the pet leash to a fixed object (such as a pole or a street light) such that the pet is temporarily restrained near the fixed object. During the processing of binding the pet leash to the fixed object, the owner usually must wind the pet leash around the fixed object several times and tie the leash to the fixed object with a knot to ensure that the pet leash is securely fastened to the fixed object; however, the abovementioned actions of winding and tying cost time, and the actions of unwinding and untying also cost time, which is inconvenient for the owner.

Therefore, there is a need to provide a new pet leash that allows the user to easily and quickly fasten the pet leash to an external object.

US 4,879,972 discloses a pet leash for two dogs.

### SUMMARY OF THE INVENTION

It is an object of the present invention to provide a pet leash which is easy to fasten to an external object.

To achieve the abovementioned object, the pet leash of the present invention is applied to a pet. The pet leash according to claim 1 includes a front leash, a rear leash, a carabiner, and a loop-shaped handle. The front leash includes a front leash first end and a front leash second end; the front leash second end is located at an opposite end of the front leash first end. The rear leash includes a rear leash first end and a rear leash second end; the rear leash second end is located at an opposite end of the rear leash first end. The carabiner comprises a first closed loop which is connected to the front leash second end and comprises a second closed loop which is connected to the rear leash first end. The loop-shaped handle is connected to the rear leash second end and used for being fastened by the carabiner. The loop-shaped handle can be held by a user or be fastened by the carabiner to form a fastening ring.

According to one embodiment of the present invention, when the loop-shaped handle is fastened by the carabiner, the loop-shaped handle and the carabiner form a fastening ring.

According to one embodiment of the present invention, the fastening ring is used for fastening to a fastening unit.

According to one embodiment of the present invention, the connecting part is connected to the front leash first end, and the connecting part is used for fastening to the pet.

According to one embodiment of the present invention, the pet leash further includes a size adjusting part, and the size adjusting part is movably connected to the front leash.

According to one embodiment of the present invention, the size adjusting part further includes a fastening part, and the connecting part is used for fastening to the fastening part of the size adjusting part.

According to one embodiment of the present invention, the connecting part further includes a trigger hook, and the trigger hook is used for fastening to the fastening part of the size adjusting part.

According to one embodiment of the present invention, when the connecting part is fastened to the fastening part of the size adjusting part, the connecting part and the size adjusting part form a pet collar ring.

According to one embodiment of the present invention, the pet collar ring is used for fastening to the pet.

According to one embodiment of the present invention, the size adjusting part is used for adjusting the size of the pet collar ring.

According to one embodiment of the present invention, the pet leash further includes a stopper mounted between the carabiner and the size adjusting part.

According to one embodiment of the present invention, the front leash and the rear leash are a rope, a cord, or a chain.

According to one embodiment of the present invention, the loop-shaped handle is a rope, a cord, or a strap.

### BRIEF DESCRIPTION OF THE DRAWINGS

FIG. 1 illustrates a schematic drawing of one embodiment of the pet leash of the present invention.
FIG. 2 illustrates a schematic drawing of the pet leash when the connecting part forms the pet collar ring of one embodiment of the present invention.
FIG. 2a illustrates a schematic drawing of the pet leash when the connecting part forms another kind of pet collar ring of one embodiment of the present invention.
FIG. 2b illustrates a schematic drawing of the pet leash when the pet collar ring slide along the direction A of one embodiment of the present invention.
FIG. 3 illustrates a schematic drawing of the pet leash and the pet of one embodiment of the present invention.
FIG. 4 illustrates a schematic drawing of the pet leash and the fastening unit of one embodiment of the present
FIG. 5 illustrates a schematic drawing of the pet leash and the pet of one embodiment of the present invention.

### DETAILED DESCRIPTION OF THE PREFERRED EMBODIMENT

These and other objects and advantages of the present invention will become apparent from the following description of the accompanying drawings, which disclose several embodiments of the present invention. It is to be understood that the drawings are to be used for purposes of illustration only, and not as a definition of the invention.

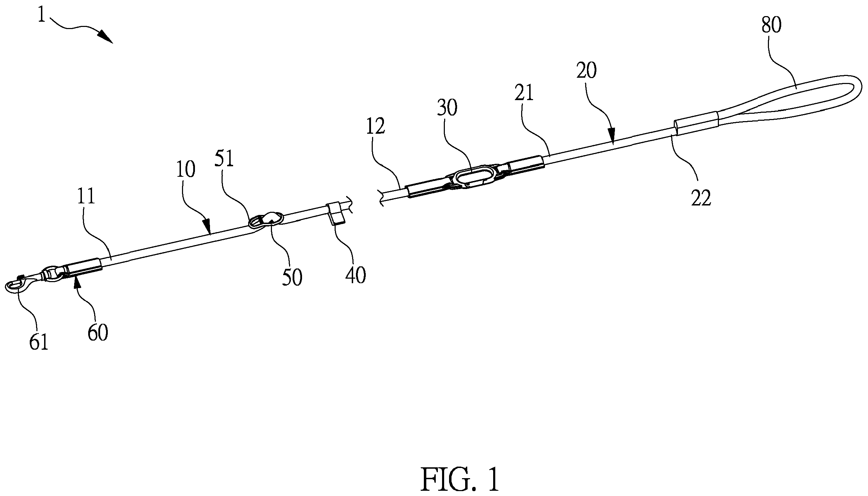

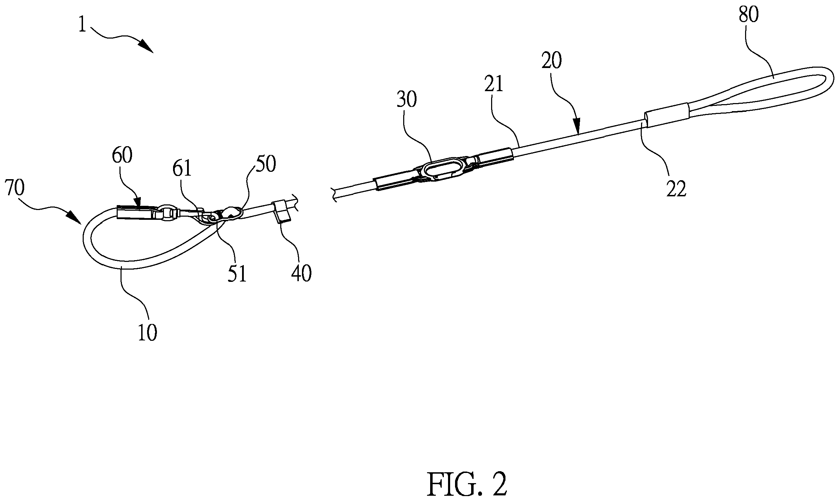

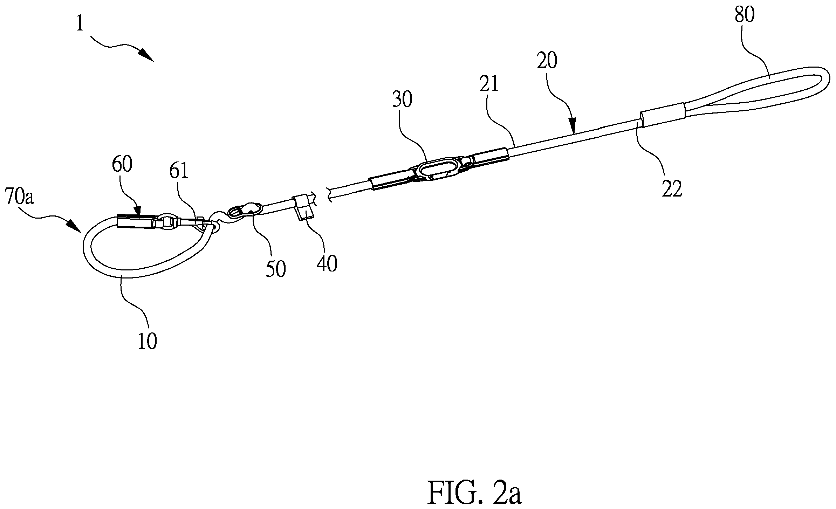

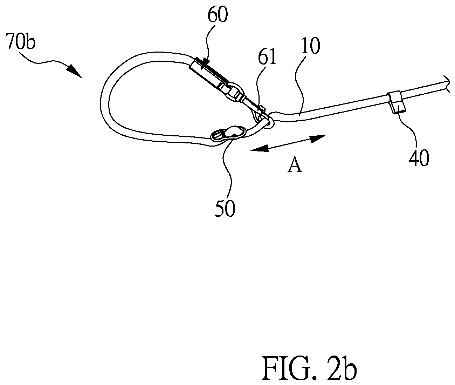

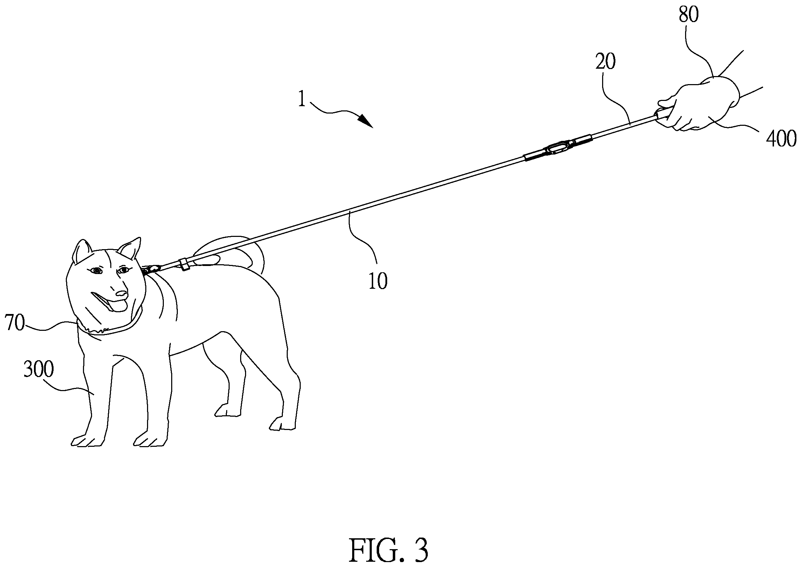

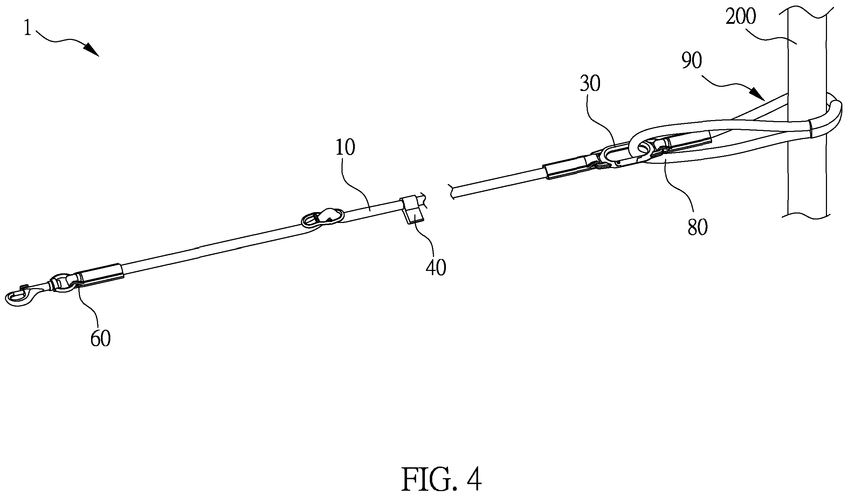

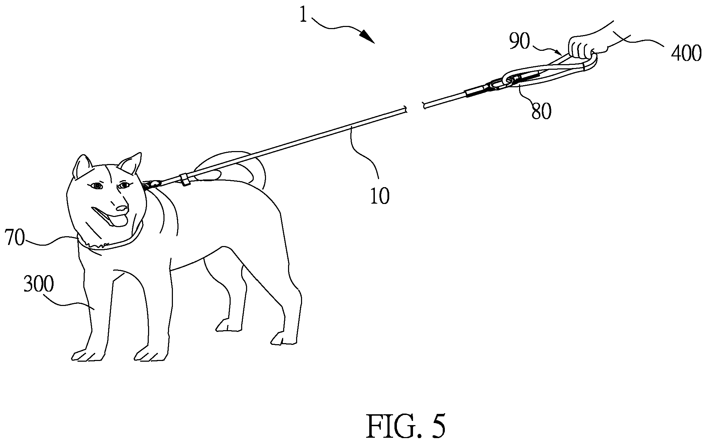

Please refer to FIG. 1 to FIG. 5 regarding one embodiment of the pet leash of the present invention. FIG. 1 illustrates a schematic drawing of one embodiment of the pet leash of the present invention. FIG. 2 illustrates a schematic drawing of the pet leash when the connecting part forms the pet collar ring of one embodiment of the present invention. FIG. 2a illustrates a schematic drawing of the pet leash when the connecting part forms another kind of pet collar ring of one embodiment of the present invention. FIG. 2b illustrates a schematic drawing of the pet leash when the pet collar ring slide along the direction A of one embodiment of the present invention. FIG. 3 illustrates a schematic drawing of the pet leash and the pet of one embodiment of the present invention. FIG. 4 illustrates a schematic drawing of the pet leash and the fastening unit of one embodiment of the present invention. FIG. 5 illustrates a schematic drawing of the pet leash and the pet of one embodiment of the present invention.

As shown in FIG. 1 and FIG. 3, in one embodiment of the present invention, the pet leash 1 is applied to a pet 300, and the pet 300 can be a dog, a cat, a rabbit, or other kinds of animal. The pet leash 1 includes a front leash 10, a rear leash 20, a connecting part 60, a carabiner 30, a loop-shaped handle 80, a size adjusting part 50, and a stopper 40.

As shown in FIG. 1 to FIG. 3, in one embodiment of the present invention, the front leash 10 and the rear leash 20 can be a rope, a cord, or a chain or other kinds of binding, but the type of the front leash 10 and the rear leash 20 are not limited to the abovementioned design, the type of the front leash 10 and the rear leash 20 can be changed to meet the requirement of walking a dog or training. The front leash 10 includes a front leash first end 11 and a front leash second end 12, and the front leash second end 12 is located at an opposite end of the front leash first end 11. The rear leash 20 includes a rear leash first end 21 and a rear leash second end 22, and the rear leash second end 22 is located at an opposite end of the rear leash first end 21.

The connecting part 60 connects the front leash first end 11, for fastening to the pet 300. The connecting part 60 is connected to an external pet collar in the embodiment, but it can also be connected to a harness. The connecting part 60 includes a trigger hook 61, and the trigger hook 61 is used for fastening to the size adjusting part 50. The fastening part trigger hook 61 has a loop and a gate; if the user wants to use the trigger hook 61 to fasten the size adjusting part 50, the user should open the gate, put the size adjusting part 50 into the loop of the trigger hook 61, and close the gate, such that the loop and the gate of the trigger hook 61 form a closed loop structure, and the size adjusting part 50 will be fastened in the closed loop structure; however, because the structure of the trigger hook 61 is already disclosed in the prior art, there is no need for further description. Besides, the structure of the trigger hook 61 is not limited to the abovementioned description, it can be changed to other structure which can provide the fastening function.

The stopper 40 is mounted between the carabiner 30 and the size adjusting part 50, and the stopper 40 can move along the front leash 10. The stopper 40 is used for blocking the movement of the trigger hook 61.

The size adjusting part 50 is movably connected to the front leash 10, such that the size adjusting part 50 can move on the front leash 10. The size adjusting part 50 includes a fastening part 51. The fastening part 51 is a ring structure, used for fastening to the trigger hook 61. When the trigger hook 61 is fastened to the ring structure of the fastening part 51 of the size adjusting part 50, the trigger hook 61 and the size adjusting part 50 form a pet collar ring 70. The pet collar ring 70 is used for fastening to the pet 300. Via the movement of the size adjusting part 50 on the front leash 10, the length of the front leash 10 between the size adjusting part 50 and the trigger hook 61 can be changed, whereby the size of the pet collar ring 70 can be changed to accommodate the pet 300 of different sizes. However, the pet collar ring forming method is not limited as the abovementioned application; as shown in FIG. 2a and FIG. 2b, the trigger hook 61 can also go around the front leash 10 to form another kind of pet collar ring 70a, the trigger hook 61 can slide along the front leash 10 for adjusting the length of this kind of pet collar ring 70a, and the size adjusting part 50 can limit the sliding of the trigger hook 61, so the pet collar ring 70a does not become so big that the pet 300 can get out of the collar ring 70a. Furthermore, the trigger hook 61 can also go around between the size adjusting part 50 and the stopper 40 to form the pet collar ring 70b. The trigger hook 61 can slide on the front leash 10 along the direction A, and the stopper 80 can block the movement of the trigger hook 31 to prevent the size of the pet collar ring 70b to become too large.

As shown in various figures, the loop-shaped handle 80 is in the form of a loop, which may be of fixed, variable and/or adjustable size. The loop may be a closed loop or a closable loop. In general, it will be flexible over at least part of its length.

As shown in FIG. 1, FIG. 3 and FIG. 4, in one embodiment of the present invention, the carabiner 30 is connected to the front leash second end 12 and the rear leash first end 21. The carabiner 30 has a loop and a gate, and the user can use the carabiner 30 to fasten an object via operating the gate and the loop. The loop-shaped handle 80 is connected to the rear leash second end 22. The loop-shaped handle 80 is a rope, a cord, a strap, but the type of the loop-shaped handle 80 is not limited to that design. The loop-shaped handle 80 can be held by a user or can be fastened by the carabiner 30 to form a fastening ring 90. When the loop-shaped handle 80 is fastened by the carabiner 30, the loop-shaped handle 80 and the carabiner 30 form the fastening ring 90. The fastening ring 90 is used for fastening to a fastening unit 200; the fastening unit 200 of the present invention can be a street light, a pole, a wall mounted bar, or other kinds of objects to which the fastening ring 90 can be fastened.

When the user wants to apply the pet leash 1 of the present invention to the pet 300 to walk with the pet 300, as shown in FIG. 1 to FIG. 3, the user can fasten the trigger hook 61 of the connecting part 60 to the fastening part 51 of the size adjusting part 50, allowing the trigger hook 61 of the connecting part 60 and the size adjusting part 50 form the pet collar ring 70; then the user can fasten the pet collar ring 70 to the neck or back of the pet 300 and adjust the position of the size adjusting part 50 on the front leash 10 according to the size of the neck or the back of the pet 300, such that the pet collar ring 70 can be fastened to the neck or the back of the pet 300 with a suitable size. Therefore, the user can use the hand 400 to hold the loop-shaped handle 80 and walk with the pet 300 which is fastened by the pet leash 1.

When the user walks with the pet 300 fastened to the pet leash 1, and the user needs his hands free (e.g. Tie a shoe lace), or goes into a place where pets are not allowed (such as a supermarket, a library, or a restaurant), or do something that is difficult while holding the dog at the same time (open or close an umbrella), the user can temporarily attach the pet to an external object. As shown in FIG. 1 and FIG. 4, the user can place the loop-shaped handle 80 and the rear leash 20 around a fastening unit 200, and fasten the loop-shaped handle 80 with the carabiner 30; as a result, the fastening ring 90 thus formed from the rear leash 20, the loop-shaped handle 80 and the carabiner 30 will be around the fastening unit 200 and fastened to the fastening unit 200. Via the fastening of the fastening ring 90 to the fastening unit 200, the pet 300 fastened to the pet leash 1 can be restrained near the fastening unit 200 such that the user can temporarily leave the pet 300 and enter a place where pets are not allowed.

As shown in FIG. 5, if the user needs to shorten the leash while walking the dog, the user can form the fastening ring 90, allowing the total length of the leash to be shortened.

Via the design of the pet leash 1 of the present invention, the user can quickly and easily fasten the pet leash 1 to a fastening unit 200 and can easily shorten the leash.

It is noted that the above-mentioned embodiments are only for illustration. It is intended that the present invention cover modifications and variations of this invention provided they fall within the scope of the following claims. Therefore, it will be apparent to those skilled in the art that various modifications and variations can be made to the structure of the present invention without departing from the scope of the invention.

## Claims

1. A pet leash (1), applied to a pet (300), the pet leash (1) comprising:
a front leash (10), comprising a front leash first end (11) and a front leash second end (12), wherein the front leash second end (12) is located at an opposite end of the front leash first end (11);
a rear leash (20), comprising a rear leash first end (21) and a rear leash second end (22), wherein the rear leash second end (22) is located at an opposite end of the rear leash first end (21);
a carabiner (30) comprising a first closed loop connected to the front leash second end (12) and comprising a second closed loop connected to the rear leash first end (21); and
a loop-shaped handle (80), connected to the rear leash second end (22); wherein the loop-shaped handle (80) can be held by a user or can be fastened by the carabiner (30) to form a fastening ring (90).

2. The pet leash as claimed in Claim 1, wherein when the loop-shaped handle (80) is fastened by the carabiner (30), the loop-shaped handle (80) and the carabiner (30) form the fastening ring (90).

3. The pet leash as claimed in Claim 2, wherein the fastening ring (90) is used for fastening to a fastening unit (200).

4. The pet leash as claimed in Claim 3, further comprising a connecting part (60) connected to the front leash first end (11), wherein the connecting part (60) is used for fastening the pet (300).

5. The pet leash as claimed in Claim 4, further comprising a size adjusting part (50), the size adjusting part (50) being movably connected to the front leash (10).

6. The pet leash as claimed in Claim 5, wherein the size adjusting part (50) further comprises a fastening part (51), and the connecting part (60) is used for fastening to the fastening part (51) of the size adjusting part (50).

7. The pet leash as claimed in Claim 6, wherein the connecting part (60) further comprises a trigger hook (61), and the trigger hook (61) is used for fastening to the fastening part (51) of the size adjusting part (50).

8. The pet leash as claimed in Claim 7, wherein when the connecting part (60) is fastened to the fastening part (51) of the size adjusting part (50), the connecting part (60) and the size adjusting part (50) form a pet collar ring (70).

9. The pet leash as claimed in Claim 8, wherein the pet collar ring (70) is used for fastening to the pet (300).

10. The pet leash as claimed in Claim 9, wherein the size adjusting part (50) is used for adjusting the size of the pet collar ring (70).

11. The pet leash as claimed in Claim 10, further comprising a stopper (40) mounted between the carabiner (30) and the size adjusting part (50).

12. The pet leash as claimed in Claim 11, wherein the front leash (10) and the rear leash (20) are a rope, a cord or a chain, and the loop-shaped handle (80) is a rope, a cord, or a strap.

13. The pet leash as claimed in Claim 1, further comprising a connecting part (60) connected to the front leash first end (11), wherein the connecting part (60) is used for fastening the pet (300).

14. The pet leash as claimed in Claim 13, further comprising a size adjusting part (50), the size adjusting part (50) is movably connected to the front leash (10).

15. The pet leash as claimed in Claim 14, wherein the size adjusting part (50) further comprises a fastening part (51), and the connecting part (60) is used for fastening to the fastening part (51) of the size adjusting part (50).

## Patentansprüche

1. Eine Haustierleine (1), die an einem Haustier (300) angebracht wird, die Haustierleine (1) umfassend:
eine vordere Leine (10), die ein erstes Ende der vorderen Leine (11) und zweites Ende der vorderen Leine (12) umfasst, wobei das zweite Ende der vorderen Leine (12) sich an einem gegenüberliegenden Ende des ersten Endes der vorderen Leine (11) befindet;
eine hintere Leine (20), die ein erstes Ende der hinteren Leine (21) und ein zweites Ende der hinteren Leine (22) umfasst, wobei das zweite Ende der hinteren Leine (22) sich an einem entgegengesetzten Ende des ersten Endes (21) der hinteren Leine befindet;
einen Karabiner (30), der eine erste geschlossene Schlaufe umfasst, die mit dem zweiten Ende der vorderen Leine (12) verbunden ist und eine zweite geschlossene Schlaufe umfasst, die mit dem ersten Ende der hinteren Leine (21) verbunden ist; und
einen schlaufenförmigen Griff (80), der mit dem zweiten Ende der hinteren Leine (22) verbunden ist; wobei der schlaufenförmige Griff (80) von einem Benutzer gehalten werden kann oder durch den Karabiner (30) befestigt werden kann, um einen Befestigungsring (90) zu bilden.

2. Die Haustierleine gemäß Anspruch 1, wobei, wenn der schlaufenförmige Griff (80) durch den Karabiner (30) befestigt wird, der schlaufenförmige Griff (80) und der Karabiner (30) den Befestigungsring (90) bilden.

3. Die Haustierleine gemäß Anspruch 2, wobei der Befestigungsring (90) für die Befestigung an einer Befestigungseinheit (200) verwendet wird.

4. Die Haustierleine gemäß Anspruch 3, die weiterhin ein Verbindungsteil (60) umfasst, das mit dem ersten Ende der vorderen Leine (11) verbunden ist, wobei das Verbindungsteil (60) zur Befestigung des Haustieres (300) dient.

5. Die Haustierleine gemäß Anspruch 4, die weiterhin ein Größenanpassungsteil (50) umfasst, wobei das Größenanpassungsteil (50) an der vorderen Leine (10) beweglich verbunden ist.

6. Die Haustierleine gemäß Anspruch 5, wobei das Größenanpassungsteil (50) ferner ein Befestigungsteil (51) umfasst, und das Verbindungsteil (60) zur Befestigung am Befestigungsteil (51) des Größenanpassungsteils (50) genutzt wird.

7. Die Haustierleine gemäß Anspruch 6, wobei das Verbindungsteil (60) ferner einen Auslösehaken (61) umfasst, und der Auslösehaken (61) zur Befestigung am Befestigungsteil (51) des Größenanpassungsteils (50) genutzt wird.

8. Die Haustierleine gemäß Anspruch 7, wobei wenn das Verbindungsteil (60) an das Befestigungsteil (51) des Größenanpassungsteils (50) befestigt ist, das Verbindungsteil (60) und das Größenanpassungsteil (50) ein Haustier-Halsband (70) bildet.

9. Die Haustierleine gemäß Anspruch 8, wobei das Haustier-Halsband (70) zur Befestigung am Haustier (300) verwendet wird.

10. Die Haustierleine gemäß Anspruch 9, wobei das Größenanpassungsteil (50) zum Anpassen der Größe des Haustier-Halsbands (70) genutzt wird.

11. Die Haustierleine gemäß Anspruch 10, weiterhin umfassend einen Stopper (40), der zwischen dem Karabiner (30) und dem Größenanpassungsteil (50) angebracht ist.

12. Die Haustierleine gemäß Anspruch 11, wobei die vordere Leine (10) und die hintere Leine (20) ein Seil, eine Schnur oder eine Kette sind, und der schlaufenförmige Griff (80) ein Seil, eine Schnur oder ein Riemen ist.

13. Die Haustierleine gemäß Anspruch 1, die ferner ein Verbindungsteil (60) umfasst, das mit dem ersten Ende (11) der vorderen Leine verbunden ist, wobei das Verbindungsteil (60) zur Befestigung des Haustieres (300) dient.

14. Die Haustierleine gemäß Anspruch 13, ferner umfassend ein Größenanpassungsteil (50), wobei das Größenanpassungsteil (50) beweglich an die vordere Leine (10) befestigt ist.

15. Die Haustierleine gemäß Anspruch 14, wobei das Größenanspassungsteil (50) weiterhin ein Befestigungsteil (51) umfasst, und das Verbindungsteil (60) zur Befestigung am Befestigungsteil (51) des Größenanpassungsteils (50) genutzt wird.

## Revendications

1. Laisse d'animal de compagnie (1) utilisée pour un animal de compagnie (300), la laisse d'animal de compagnie (1) comprenant :
une laisse avant (10) comprenant une première extrémité de la laisse avant (11) et une deuxième extrémité de la laisse avant (12), dans laquelle la deuxième extrémité de la laisse avant (12) est située à une extrémité opposée de la première extrémité de la laisse avant (11) ; une laisse arrière (20) comprenant une première extrémité de la laisse arrière (21) et une deuxième extrémité de la laisse arrière (22), dans laquelle la deuxième extrémité de la laisse arrière (22) est située a une extrémité opposée de la première extrémité de la laisse arrière (21) ;
un mousqueton (30) comprenant une première boucle fermée reliée à la deuxième extrémité de la laisse avant (12) et comprenant une deuxième boucle fermée reliée à la première extrémité de la laisse arrière (21) ; et
une poignée en forme de boucle (80) reliée à la deuxième extrémité de la laisse arrière (22) ; dans laquelle la poignée en forme de boucle (80) peut être tenue par un utilisateur ou peut être fixée par le mousqueton (30) afin de former un anneau de fixation (90).

2. Laisse d'animal de compagnie selon la revendication 1, dans laquelle la poignée en forme de boucle (80) est fixée par le mousqueton (30), la poignée en forme de boucle (80) et le mousqueton (30) forment l'anneau de fixation (90).

3. Laisse d'animal de compagnie selon la revendication 2, dans laquelle l'anneau de fixation (90) est utilisé pour être fixé à une unité de fixation (200).

4. Laisse d'animal de compagnie selon la revendication 3, comprenant en outre une pièce de liaison (60) liée à la première extrémité de la laisse avant (11), dans laquelle la pièce de liaison (60) est utilisée pour attacher l'animal (300).

5. Laisse d'animal de compagnie selon la revendication 4, comprenant en outre une partie pour ajuster la taille (50), la partie pour ajuster la taille (50) étant reliée de façon mobile à la laisse avant (10).

6. Laisse d'animal de compagnie selon la revendication 5, dans laquelle la partie pour ajuster la taille (50) comprend en outre une partie de fixation (51), et la pièce de liaison (60) est utilisée pour être liée à la partie de fixation (51) de la partie pour ajuster la taille (50).

7. Laisse d'animal de compagnie selon la revendication 6, dans laquelle la pièce de liaison (60) comprend en outre un crochet de déclenchement (61), et le crochet de déclenchement (61) est utilisé pour être fixé à la partie de fixation (51) de la partie pour ajuster la taille (50).

8. Laisse d'animal de compagnie selon la revendication 7, dans laquelle la pièce de liaison (60) est fixée à la partie de fixation (51) de la partie pour ajuster la taille (50), la pièce de liaison (60) et la partie pour ajuster la taille (50) forment un anneau de collier d'animal de compagnie (70).

9. Laisse d'animal de compagnie selon la revendication 8, dans laquelle l'anneau de collier d'animal de compagnie (70) est utilisé pour être fixé à l'animal (300).

10. Laisse d'animal de compagnie selon la revendication 9, dans laquelle la partie pour ajuster la taille (50) est utilisée pour ajuster la taille de l'anneau de collier d'animal de compagnie (70).

11. Laisse d'animal de compagnie selon la revendication 10, comprenant en outre un dispositif d'arrêt (40) monté entre le mousqueton (30) et la partie pour ajuster la taille (50).

12. Laisse d'animal de compagnie selon la revendication 11, dans laquelle la laisse avant (10) et la laisse arrière (20) sont une corde, un cordon ou une chaîne, et la poignée en forme de boucle (80) est une corde, un cordon ou une sangle.

13. Laisse d'animal de compagnie selon la revendication 1, comprend en outre une pièce de liaison (60) liée à la première extrémité de la laisse avant (11), dans laquelle la pièce de liaison (60) est utilisée pour fixer l'animal de compagnie (300).

14. Laisse d'animal de compagnie selon la revendication 13, comprend en outre une partie pour ajuster la taille (50), la partie pour ajuster la taille (50) étant reliée de façon mobile à la laisse avant (10).

15. Laisse d'animal de compagnie selon la revendication 14, dans laquelle la partie pour ajuster la taille (50) comprend en outre une partie de fixation (51), et la pièce de liaison (60) est utilisée pour être fixée à la partie de fixation (51) de la partie pour ajuster la taille (50).
